Europäisches Patentamt

European Patent Office

Office européen des brevets

(11) Numéro de publication : **0 209 431**
**B1**

(12) **FASCICULE DE BREVET EUROPÉEN**

(45) Date de publication du fascicule du brevet :
28.06.89

(51) Int. Cl.⁴ : **B 60 K 41/26**

(21) Numéro de dépôt : **86401381.8**

(22) Date de dépôt : **24.06.86**

(54) **Dispositif de commande couplée de boîte de vitesses et de frein à main.**

(30) Priorité : 28.06.85 FR 8509880

(43) Date de publication de la demande :
21.01.87 Bulletin 87/04

(45) Mention de la délivrance du brevet :
28.06.89 Bulletin 89/26

(84) Etats contractants désignés :
BE DE GB IT

(56) Documents cités :
DE—C— 729 325
FR—E— 67 960
US—A— 1 908 907
US—A— 2 926 762
US—A— 3 590 934
US—A— 3 595 351

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Galles, Henri**
**4, Chemin Menuel**
**F-78126 Aulnay sur Mauldre (FR)**
Inventeur : **Delmas, Jean-Paul**
**2, rue de Navarre**
**F-78990 Montfort l'Amaury (FR)**

(74) Mandataire : **Chassagnon, Jean-Alain et al**
**REGIE NATIONALE DES USINES RENAULT (S.0804)**
**F-92109 Boulogne-Billancourt Cedex (FR)**

## Description

La présente invention se rapporte à un dispositif de commande couplée de boîte de vitesses et de frein à main, qui intègre la commande de boîte de vitesses et la commande de frein à main en un seul et même ensemble.

Dans les véhicules automobiles modernes, la commande de boîte de vitesses et la commande de frein à main sont disposées côte-à-côte, ou l'une derrière l'autre, et généralement au milieu de l'habitacle avant du véhicule. Plus précisément et plus souvent ces commandes sont disposées sur le plancher du véhicule en avant et entre les sièges avant du véhicule. Chaque commande a son dispositif propre et sa poignée de commande qui lui est spécifique. Ce type de dispositif nécessite ainsi un grand encombrement, car chacune des deux commandes a son propre débattement, qui ne doit pas gêner le débattement de l'autre commande. D'autres dispositifs comme celui du document US-A-1 908 907 décrivent un levier de vitesses qui supporte la commande de frein à main. Ce document a été utilisé pour délimiter la revendication 1.

Le but de la présente invention est de proposer un dispositif de commande, qui intègre la commande de boîte de vitesses, et la commande de frein à main en une seule et même commande, de manière à ne nécessiter qu'un seul pommeau de commande.

A cet effet l'invention a pour objet un dispositif de commande couplée de boîte de vitesses et de frein à main, comportant une canne de frein à main commun pour la sélection et le passage des vitesses et pour le serrage du frein à main et des moyens de sécurité commandés par une poignée de commande pour bloquer et débloquer le frein à main. Un carter de couplage est solidaire à des moyens de commande de sélection et de passage de vitesse et supporte le système de frein à main et un axe d'articulation sur lequel la canne de frein à main est mobile en rotation ; que des moyens de sécurité à double effet sont prévus pour bloquer l'articulation de la canne de frein à main contre ledit carter de couplage, qui est mobile en rotation et translation et est lié à un axe de couplage supporté par deux paliers solidaires de la caisse de véhicule ; et qu'un système de verrouillage antipassage de vitesse est prévu entre le carter de couplage et l'axe de couplage qui est immobile en translation.

Selon un mode de réalisation de l'invention, le carter de couplage comprend deux flasques, qui ont une déformation locale, et qui sont raccordées l'une à l'autre par un fond. Ce carter de couplage est soudé à un élément appartenant au moyen de commande. Les flasques du carter de couplage supportent et bloquent par un axe d'immobilisation le secteur denté appartenant audit système de frein à main. De plus l'arrêt de gaine du système de frein à main est lié et supporté par lesdites flasques.

Selon un mode de réalisation de l'invention, les moyens de commande comportent :

une bielle qui est soudée au carter de couplage ;

deux biellettes dont les extrémités sont supportées par deux paliers supérieurs solidaires de l'axe de couplage, et par deux paliers inférieurs solidaires de la bielle ; l'un des paliers inférieurs recevant la chape d'une bielle de commande de la boîte de vitesses ;

deux butées qui immobilisent en translation l'axe de couplage.

Selon un mode de réalisation de l'invention, les moyens de commande comportent :

une bielle qui est soudée au carter de couplage ;

une biellette, dont les extrémités sont supportées par un palier supérieur solidaire de l'axe de couplage, et par un palier inférieur solidaire de la bielle ;

une deuxième biellette dont l'une des extrémités est supportée par un palier inférieur solidaire de la bielle, et recevant la chape d'articulation de la bielle de commande de la boîte de vitesses, et dont l'autre extrémité est supportée par une chape solidaire de l'axe de couplage, cette chape coopérant avec une chape solidaire de la bielle de réaction de la boîte de vitesses.

Selon un mode de réalisation de l'invention, le dispositif comporte un système de verrouillage anti-passage des vitesses. Ce système de verrouillage comporte un rochet de verrouillage qui est monté sur un axe d'articulation porté par le carter de couplage. Ce rochet de verrouillage est rappelé par un ressort de rappel, et il est tiré par une tige de rappel. Le ressort de rappel est accroché à un axe d'immobilisation solidaire du carter de couplage, et la tige de rappel est accrochée à la canne du système de frein à main. Le rochet de verrouillage comporte une dent qui coopère avec des crans qui sont aménagés sur l'axe de couplage.

Les moyens de sécurité à double effet consistent en :

deux rochets de verrouillage qui sont montés sur un même axe d'articulation, et qui ont respectivement une dent, qui coopère avec des crans aménagés sur le secteur denté. Ce secteur denté est monté sur l'axe d'articulation du frein à main, et il est bloqué par un axe d'immobilisation monté sur le carter de couplage ;

deux fourches de commande, qui actionnent respectivement chacun des rochets de verrouillage, et qui sont montés à l'extrémité d'une tige de commande. Cette tige de commande s'articule sur un axe d'articulation, qui est solidaire de la poignée de commande du frein à main. Cette poignée est montée dans la canne de frein à main au moyen d'un axe d'articulation.

Selon un mode de réalisation de l'invention, le dispositif de commande comporte un pommeau, qui est monté sur la canne de frein à main ce pommeau est lié par un soufflet à un boîtier d'habillage de l'ensemble.

Selon un mode de réalisation de l'invention, le pommeau est monté perpendiculairement sur la canne de frein à main.

Selon un mode de réalisation de l'invention, le pommeau destiné à une commande de boîte de vitesses automatique est monté sur la canne de frein à main.

Le dispositif de commande couplée de boîte de vitesses et de frein à main selon l'invention, présente ainsi l'avantage de rassembler en un seul pommeau, l'ensemble des commandes de la boîte de vitesses et du frein à main. Cette nouvelle architecture permet de limiter l'encombrement dans l'habitacle, et de loger ainsi plus facilement ces commandes. Ceci est particulièrement intéressant dans les véhicules modernes, où l'on cherche à avoir le maximum d'habitabilité dans un encombrement extérieur réduit.

D'autres caractéristiques et avantages de la présente invention ressortiront de la description qui suit des modes de réalisations donnés à titre d'exemple en référence au dessin annexé sur lesquels :

la figure 1 est une coupe longitudinale du dispositif de commande couplée de boîte de vitesses et de frein à main selon l'invention ;

la figure 2 est une vue en perspective partielle de la figure 1 ;

la figure 3 est une vue en perspective partielle d'une variante de l'invention ;

la figure 4 est une vue en perspective partielle d'une variante de la poignée double ;

la figure 5 est une vue en perspective partielle d'une commande selon l'invention ou une boîte de vitesses automatique.

Le dispositif de commande selon l'invention consiste essentiellement à intégrer en une seule structure les deux commandes de boîte de vitesses et de frein à main, au moyen d'un carter de couplage 1. Ce carter de couplage 1 est solidaire des moyens de commande de sélection et de passage des vitesses ; et il supporte le système de frein à main. De plus le carter de couplage 1 permet le passage du couple de serrage du frein à main par l'intermédiaire desdits moyens de commande de sélection et de passage des vitesses.

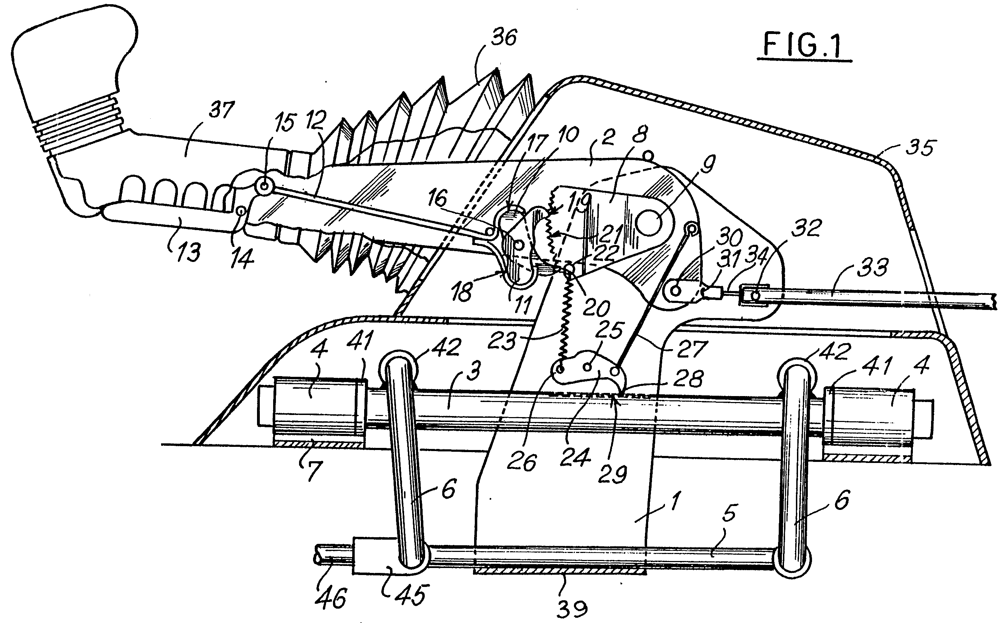

La figure 1 représente en coupe l'ensemble du dispositif de commande couplée de boîte de vitesses et de frein à main selon l'invention. Le carter de couplage 1 comprend deux flasques 38, qui sont disposées l'une en face de l'autre, et qui sont raccordées l'une à l'autre par un fond 39. Chacune de ces deux flasques 38 a une déformation locale 40, qui permet le débattement des moyens de commande de sélection et de passage des vitesses.

Le carter du couplage 1 supporte le système de frein à main au moyen d'un axe d'articulation 9. Cet axe d'articulation 9 reçoit la canne de frein à main 2, qui vient tourner autour dudit axe 9.

Le secteur denté 8 de frein à main vient également se monter sur cet axe d'articulation 9, et il est bloqué par un axe d'immobilisation 22. Cet axe d'immobilisation 22 est monté sur les flasques 38 du carter de couplage 1. Des dents 19 sont disposées sur la périphérie de ce secteur denté 8.

L'ensemble du système d'arrêt de gaine de frein à main est également disposé sur le carter de couplage 1. Un arrêt de gaine 32 est lié et supporté par les flasques 38 du carter de couplage 1. Cet arrêt de gaine 32 reçoit la gaine souple 33 de frein à main et laisse passer le câble 34. Ce câble 34 se termine par une chape 31 d'embout de câble qui vient se monter sur un axe d'accrochage 30 du câble, qui est porté par la canne 2 du frein à main.

Les moyens de commande de sélection et de passage des vitesses sont liés à un axe de couplage 3, qui est supporté par deux paliers 4, qui sont solidaires de la caisse du véhicule en venant se monter sur un élément 7 de ladite caisse.

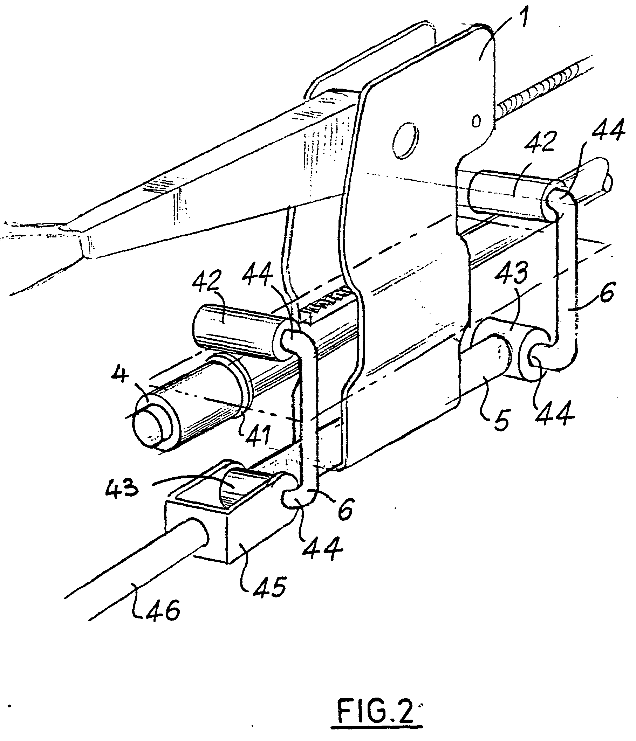

Un premier mode de réalisation des moyens de commande de sélection et de passage des vitesses est représenté sur les figures 1 et 2. Il comporte une bielle 5 qui est soudée au carter de couplage 1. Cette bielle 5 se termine à chacune de ses extrémités par un palier inférieur 43. Deux paliers supérieurs 42 sont disposés sur l'axe de couplage 3 et sont solidaires de cet axe de couplage 3.

Deux biellettes 6 viennent s'engager dans ces paliers supérieur 42 et inférieur 43. Chacune de ces biellettes 6 se termine à chaque bout par une extrémité 44 qui est perpendiculaire à ladite biellette 6. Chacune de ses extrémités 44 vient s'engager respectivement dans un trou aménagé dans les paliers supérieurs 42 et les paliers inférieurs 43. De plus l'un des paliers inférieurs 43 reçoit la chape 45 de la bielle de commande 46 de la boîte de vitesses.

Enfin deux butées 41 sont disposées sur l'axe de couplage 3 contre chacun des paliers 4, afin d'immobiliser en translation l'axe de couplage 3.

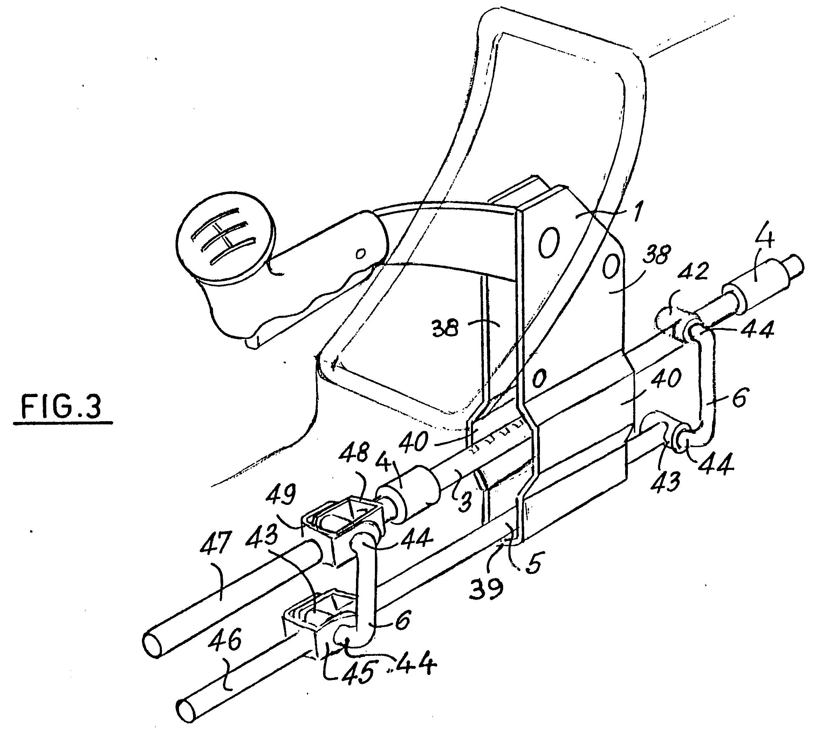

Un deuxième mode de réalisation des moyens de commande de sélection et de passage des vitesses est représenté sur la figure 3. Il comporte une bielle 5 qui est soudée au carter de couplage 1. Un palier inférieur 43 est soudé à chacune des extrémités de la bielle 5. L'axe de couplage 3 porte un palier supérieur 42 près d'un des paliers 4, et il se termine par une chape 48 qui est disposée à l'extérieur de l'autre palier 4.

Le dispositif comporte deux biellettes 6, qui se terminent à chaque bout par une extrémité 44, disposé perpendiculairement à chacune de ses biellettes 6.

L'extrémité 44 de l'une de ces biellettes 6 est supportée par le palier supérieur 42, tandis que l'autre extrémité 44 de la même biellette est supportée par le palier inférieur 43 correspondant.

L'autre biellette 6 a une de ses extrémités 44 qui est supportée par le palier inférieur 43 correspondant, et cette extrémité 44 reçoit la chape d'articulation 45 de la bielle de commande 46 de la boîte de vitesses. L'autre extrémité 44 de cette biellette 6 est supportée par la chape 48 solidaire de l'axe de couplage 3. Cette chape 48 coopérant avec une chape 49 qui s'articule autour de cette extrémité 44. La chape 49 est solidaire de la bielle de réaction 47 de la boîte de vitesses.

Le dispositif de commande couplée de boîte de vitesses et de frein à main selon l'invention, comporte un système de verrouillage anti-passage des vitesses. Ce système de verrouillage est constitué par un rochet de verrouillage 24 qui est monté sur un axe d'articulation 25. L'axe d'articulation 25 est lui-même porté par les flasques 38 du carter de couplage 1. Le rochet de verrouillage 24 est rappelé par un ressort de rappel 23, qui est accroché à l'axe d'immobilisation 22 porté par les flasques 38 du carter de couplage 1. Le rochet de verrouillage 24 est d'autre part tiré par une tige de rappel 27, qui est accroché à la canne 2 du frein à main. Ce rochet de verrouillage 24 se termine par une dent 28 qui coopère avec des crans 29 aménagés sur l'axe de couplage 3. Il faut également noter que le ressort de rappel 23 est accroché sur le rochet de verrouillage 24 au moyen d'un trou 26.

Le système de frein à main est muni de moyens de sécurité à double effet. Ces moyens de sécurité consistent en deux rochets de verrouillage 10 et 11 qui sont commandés respectivement par deux fourches de commande 17 et 18.

Les deux rochets de verrouillage 10 et 11 sont montés sur un même axe d'articulation 16, qui est fixé sur la canne 2. Chacun de ces rochets de verrouillage 10 et 11 est muni respectivement d'une dent 20 et 19, qui coopère avec des crans 21 aménagés sur le secteur denté 8. Ce secteur denté 8 est monté sur l'axe d'articulation 9, et il est bloqué par l'axe d'immobilisation 22.

Les deux fourches de commande 17 et 18, qui commandent respectivement les rochets 10 et 11, sont montées à l'extrémité d'une tige de commande 12. Cette tige de commande 12 s'accroche sur un axe d'articulation 15, qui est monté sur la poignée de commande 13 du frein à main. La poignée de commande 13 vient s'engager à l'intérieur de la canne 2, et se débat à l'intérieur de cette canne 2 au moyen d'un axe d'articulation 14.

Un pommeau 37 est monté sur la canne 2 de frein à main. Ce pommeau 37 est lié par un soufflet 36, à un boîtier d'habillage 35 qui recouvre l'ensemble du dispositif.

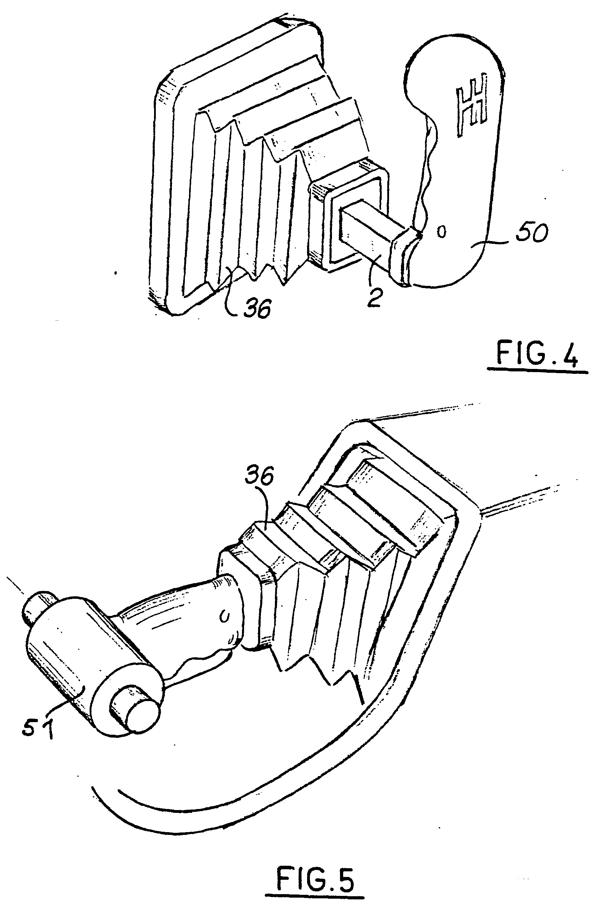

La figure 4 représente un autre mode de réalisation de l'invention, dans lequel un pommeau 50 est monté perpendiculairement à la canne 2 du frein à main.

La figure 5 représente un mode de réalisation de l'invention pour une commande couplée de boîte de vitesses automatique et de frein à main. Dans ce cas un pommeau 51 adapté au type de boîte de vitesses automatique, est monté sur la canne 2 de frein à main.

**Revendications**

1. Dispositif de commande couplée de boîte de vitesses et de frein à main, comportant une commune canne de frein à main (2) pour la sélection et le passage des vitesses et pour le serrage du frein à main et des moyens de sécurité commandés par une poignée de commande (13) pour bloquer et débloquer le frein à main (30-34), caractérisé en ce qu'un carter de couplage (1) est solidaire à des moyens de commande de sélection et de passage de vitesse (46) et supporte (à 32) le système de frein à main (30-34) et un axe d'articulation (9) sur lequel la canne de frein à main est mobile en rotation ; que des moyens de sécurité à double effet (16 à 21) sont prévus pour bloquer l'articulation de la canne de frein à main (2) contre ledit carter de couplage (1), qui est mobile en rotation et translation et est lié à un axe de couplage (3) supporté par deux paliers (4) solidaires de la caisse de véhicule ; et qu'un système de verrouillage antipassage de vitesse (23 à 29) est prévu entre le carter de couplage et l'axe de couplage qui est immobile en translation.

2. Dispositif de commande couplée selon la revendication 1 caractérisé en ce que le carter de couplage (1) comprend deux flasques (38), ayant une déformation locale (40) et raccordées l'une à l'autre par un fond (39), qui sont soudés à un élément appartenant aux moyens de commande ; les flasques (38) supportant, et bloquant, par un axe d'immobilisation (22), le secteur denté (8) dudit système de frein à main, dont l'arrêt de gaine (32) est lié et supporté par lesdites flasques (38).

3. Dispositif de commande couplée selon l'une quelconque des revendications 1 et 2 caractérisé en ce que les moyens de commande comportent :
une bielle (5) qui est soudée au carter de couplage (1) ;
deux biellettes (6) dont les extrémités (44) sont supportées par deux paliers supérieurs (42) solidaires de l'axe de couplage (3), et par deux paliers inférieurs (43) solidaires de la bielle (5) ;
l'un des paliers inférieurs (43) recevant la chape (45) d'une bielle de commande (46) ;
deux butées (41) qui immobilisent en translation l'axe de couplage (3).

4. Dispositif de commande couplée selon l'une des revendications 1 et 2 caractérisé en ce que les moyens de commande comportent :
une bielle (5) qui est soudée au carter de couplage (1) ;
une biellette (6) dont les extrémités (44) sont supportées par un palier supérieur (42) solidaire de l'axe de couplage (3), et par un palier inférieur (43) solidaire de la bielle (5) ;
une biellette (6) dont l'une des extrémités (44) est supportée par un palier inférieur (43) solidaire de la bielle (5), et recevant la chape d'articulation (45) de la bielle de commande (46), et dont l'autre extrémité (44) est supportée par une chape (48) solidaire de l'axe de couplage (3), ladite chape (48) coopérant avec une chape (49) solidaire de la bielle de réaction (47).

5. Dispositif de commande couplée selon la revendication 2 caractérisé en ce que le système de verrouillage anti-passage des vitesses comporte un rochet de verrouillage (24) monté sur un axe d'articulation (25) porté par le carter de couplage (1) ; le rochet de verrouillage (24) étant rappelé par un ressort de rappel (23), et tiré par une tige de rappel (27) ; le ressort de rappel (23) étant accroché à un axe d'immobilisation (22) solidaire du carter de couplage (1) ; la tige de rappel (27) étant accrochée à la canne (2) du système de frein à main ; le rochet de verrouillage (24) ayant une dent (28) qui coopère avec des crans (29) aménagés sur l'axe de couplage (3).

6. Dispositif de commande couplée selon la revendication 2 caractérisé en ce que les moyens de sécurité à double effet consistent en :

deux rochets de verrouillage (10) et (11) montés sur un même axe d'articulation (16) ; et ayant respectivement une dent (20) et (19) qui coopèrent avec des crans (21) aménagés sur un secteur denté (8) ; ledit secteur denté (8) étant monté sur l'axe d'articulation (9), et bloqué par l'axe d'immobilisation (22) ;

deux fourches de commande (17) et (18) commandant respectivement les rochets (10) et (11), et montées à l'extrémité d'une tige de commande (12), qui s'accroche sur un axe d'articulation (15) monté sur la poignée de commande (13) du frein à main, ladite poignée (13) étant montée dans la canne (2) de frein à main par un axe d'articulation (14).

7. Dispositif de commande couplée selon l'une des revendications précédentes caractérisé en ce qu'il comporte un pommeau (37) monté sur la canne (2) de frein à main, ledit pommeau (37) étant lié par un soufflet (36) à un boîtier d'habillage (35).

8. Dispositif de commande couplée selon l'une des revendications 1 à 6 caractérisé en ce qu'il comporte un pommeau (50) monté sur la canne (2) de frein à main.

9. Dispositif de commande couplée selon l'une quelconque des revendications 1 à 6 caractérisé en ce qu'il comporte un pommeau (51) monté sur la canne (2) de frein à main.

## Claims

1. An arrangement for the coupled control of a gearbox and a hand brake comprising a common hand brake lever (2) for gear selection and shift and for applying the hand brake and safety means which are controlled by a control handle (13) for locking and releasing the hand brake (30-34) characterised in that a coupling casing (1) is fixed with respect to gear selection and shift control means (46) and supports (at 32) the hand brake system (30-34) and a pivot (9) on which the hand brake lever is rotatable ; that double-acting safety means (16-21) are provided for locking the pivotal movement of the hand brake lever (2) against said coupling casing (1) which is movable with a rotational and translatory movement and is connected to a coupling shaft (3) supported by two bearings (4) which are fixed with respect to the vehicle body ; and that a shift-preventing locking system (23-29) is provided between the coupling casing and the coupling shaft which is immobile in respect of translatory movement.

2. A coupled control arrangement according to claim 1 characterised in that the coupling casing (1) comprises two side plate portions (38) which have a local deformation (40) and which are connected to each other by a bottom portion (39) and which are welded to an element belonging to the control means ; the side plate portions (38) supporting and locking by a stop shaft (22) the toothed sector (8) of said hand brake system, the sheath stop (32) of which is connected and supported by said side plate portions (38).

3. A coupled control arrangement according to either one of claims 1 and 2 characterised in that the control means comprise :

a rod (5) which is welded to the coupling casing (1) ;

two links (6) whose ends (44) are supported by two upper bearings (42) which are fixed with respect to the coupling shaft (3) and two lower bearings (43) which are fixed with respect to the rod (5) ;

one of the lower bearings (43) receiving the clevis member (45) of a control rod (46) ;

two abutments (41) which lock the coupling shaft (3) in respect of translatory movement.

4. A coupled control arrangement according to one of claims 1 and 2 characterised in that the control means comprise :

a rod (5) which is welded to the coupling casing (1) ;

a link (6) whose ends (44) are supported by an upper bearing (42) which is fixed with respect to the coupling shaft (3) and a lower bearing (43) which is fixed with respect to the rod (5) ;

a link (6) of which one of the ends (44) is supported by a lower bearing (43) which is fixed with respect to the rod (5) and receiving the pivot clevis member (45) of the control rod (46) while the other end (44) of the link (6) is supported by a clevis member (48) which is fixed with respect to the coupling shaft (3), said clevis member (48) cooperating with a clevis member (49) which is fixed with respect to the reaction rod (47).

5. A coupled control arrangement according to claim 2 characterised in that the shift-preventing locking system comprises a locking ratchet (24) mounted on a pivot (25) carried by the coupling casing (1) ; the locking ratchet (24) being returned by a return spring (23) and pulled by a return rod (27) ; the return spring (23) being connected to a stop shaft (22) which is fixed with respect to the coupling casing (1) ; the return rod (27) being connected to the lever (2) of the hand brake system ; the locking ratchet (24) having a tooth (28) which co-operates with notches (29) provided on the coupling shaft (3).

6. A coupled control arrangement according to claim 2 characterised in that the double-acting safety means consist of :

two locking ratchets (10 and 11) mounted on the same pivot (16) and respectively having a tooth (20 and 19) which co-operate with notches (21) provided on a toothed sector (8) ; said toothed sector (8) being mounted on the pivot (9) and locked by the stop shaft (22) ; and

two control forks (17 and 18) respectively controlling the ratchets (10 and 11) and mounted at the end of a control rod (12) which is connected to a pivot (15) mounted on the control handle (13) of the hand brake, said handle (13) being mounted in the hand brake lever (2) by a pivot (14).

7. A coupled control arrangement according to one of the preceding claims characterised in that it comprises a knob (37) mounted on the hand brake lever (2), said knob (37) being connected by a bellows (36) to a cover housing (35).

8. A coupled control arrangement according to one of claims 1 to 6 characterised in that it comprises a knob (50) mounted on the hand brake lever (2).

9. A coupled control arrangement according to any one of claims 1 to 6 characterised in that it comprises a knob (51) mounted on the hand brake lever (2).

**Patentansprüche**

1. Kombinierte Schaltgetriebe- und Handbremssteuervorrichtung, mit einem gemeinsamen Handbremshebel (2) zur Auswahl und zum Schalten der Gänge und zum Anziehen der Handbremse sowie mit einer von einem Handgriff (13) steuerbaren Sicherheitsanordnung zum Feststellen und Lösen der Handbremse (30-34), dadurch gekennzeichnet, daß ein Kupplungsgehäuse (1) fest mit der Steueranordnung für die Auswahl und das Schalten der Gänge (46) verbunden ist und (bei 32) die Handbremsanordnung (30-34) trägt sowie eine Gelenkachse (9), an der der Handbremshebel drehbeweglich angeordnet ist, daß eine doppelt wirkende Sicherheitsanordnung (16-21) vorgesehen ist zum Feststellen des Gelenkes des Handbremshebels (2) gegen das Kupplungsgehäuse (1), das drehbar und verschiebbar ist und mit einer Kupplungsachse (3) verbunden ist, die von zwei Lagern (4) getragen wird, die mit der Fahrzeugkarosserie verbunden sind und daß eine nicht verschiebbare Schaltverriegelungsanordnung (23-29) zwischen dem Kupplungsgehäuse und der Kupplungsachse vorgesehen ist.

2. Vorrichtung nach Anspruch 1, dadurch gekennzeichnet, daß das Kupplungsgehäuse (1) zwei Flansche (38) aufweist, mit einer örtlichen Deformation (40), die miteinander über ein Bodenteil (39) verbunden sind, das mit einem zur Steueranordnung gehörenden Teil verschweißt ist, wobei die Flansche (38) den Zahnabschnitt (8) der Handbremsanordnung tragen und diesen mittels einer Feststellachse (22) verriegeln, wobei eine Anschlagmuffe (32) mit den Flanschen (38) verbunden ist und von diesen getragen wird.

3. Vorrichtung nach einem der Ansprüche 1 und 2, dadurch gekennzeichnet, daß die Steueranordnung aufweist :

eine mit dem Kupplungsgehäuse (1) verschweißte Stange (5),

zwei Hebel (6), deren Enden (44) von zwei oberen Lagern (42) getragen werden, die mit der Kupplungsachse (3) fest verbunden sind und von zwei unteren Lagern (43) getragen werden, die mit der Stange (5) fest verbunden sind,

wobei eines der unteren Lager (43) die Kappe (45) eines Steuerhebels (46) aufnimmt,

zwei Anschläge (41), die die Kupplungsstange (3) verschiebefest halten.

4. Steuervorrichtung nach einem der Ansprüche 1 und 2, dadurch gekennzeichnet, daß die Steueranordnung aufweist :

eine mit dem Kupplungsgehäuse (1) verschweißte Stange (5), einen Hebel (6), dessen Enden (44) von einem oberen Lager (42) getragen werden, das mit der Kupplungsachse (3) fest verbunden ist und von einem unteren Lager (43) getragen wird, das mit der Stange (5) verbunden ist und

einen Hebel (6), dessen eines Ende (44) von einem unteren Lager (43) getragen wird, das fest mit der Stange (5) verbunden ist und eine Gelenkkappe (45) der Steuerstange (46) aufnimmt und dessen anderes Ende (44) von einer Kappe (48) getragen wird, die fest mit der Kupplungsachse (3) verbunden ist, wobei die Kappe (48) mit einer Kappe (49) zusammenwirkt, die fest mit einer Betätigungsstange (47) verbunden ist.

5. Steuervorrichtung nach Anspruch 2, dadurch gekennzeichnet, daß die Schaltverriegelungsanordnung einen Verriegelungshaken (24) aufweist, der an einer Gelenkachse (25) angeordnet ist, welche vom Kupplungsgehäuse (1) getragen wird, wobei der Verriegelungshaken (24) durch eine Rückholfeder (23) beaufschlagt ist entgegen der Wirkung einer Rückholstange (27), wobei die Rückholfeder (23) an einer Feststellachse (22) befestigt ist, die mit dem Kupplungsgehäuse (1) fest verbunden ist ; die Rückholstange (22) ist am Hebel (2) der Handbremsanordnung befestigt ; der Verriegelungshaken (24) weist einen Zahn (28) auf, der mit Kerben (29) in der Kupplungsachse (3) zusammenwirkt.

6. Steuervorrichtung nach Anspruch 2, dadurch gekennzeichnet, daß die doppelt wirkende Sicherheitsanordnung besteht aus :

zwei Verriegelungshaken (10 und 11), die auf der gleichen Gelenkachse (16) angeordnet sind und einen Zahn (20 bzw. 19) aufweisen, die mit Kerben (21) in einem Zahnabschnitt (18) zusammenwirken, wobei der Zahnabschnitt (8) auf der Gelenkachse (9) angeordnet ist und durch die Feststellachse (22) festgestellt wird ;

zwei Steuergabeln (17 und 18), welche die Haken (10 bzw. 11) steuern und die an den Enden einer Steuerstange (12) angeordnet sind, welche an einer Gelenkachse (15) befestigt sind, die am Steuergriff (13) der Handbremse angeordnet ist, wobei der Griff (13) am Hebel (2) der Handbremse über eine Gelenkachse (14) befestigt ist.

7. Vorrichtung nach einem der vorhergehenden Ansprüche, dadurch gekennzeichnet, daß sie einen Knauf (37) aufweist, der am Hebel (2) der Handbremse befestigt ist und der über einen Balg (36) mit der Ummantelung (35) eines Gehäuses verbunden ist.

8. Vorrichtung nach einem der Ansprüche 1 bis 6, dadurch gekennzeichnet, daß sie einen Knauf (50) aufweist, der am Hebel (2) der Handbremse befestigt ist.

9. Vorrichtung nach einem der Ansprüche 1 bis 6, dadurch gekennzeichnet, daß sie einen Knauf (51) aufweist, der am Hebel (2) der Handbremse befestigt ist.

FIG.1

EP 0 209 431 B1

FIG.2

FIG.3

FIG.4

FIG.5